(19) Europäisches Patentamt
European Patent Office
Office européen des brevets

(11) Publication number: 0 396 336 A1

(12) **EUROPEAN PATENT APPLICATION**

(21) Application number: 90304556.5

(22) Date of filing: 26.04.90

(51) Int. Cl.5: C08K 5/524, C08K 5/5393, C08L 33/24

(30) Priority: 03.05.89 US 346675

(43) Date of publication of application: 07.11.90 Bulletin 90/45

(84) Designated Contracting States: AT BE CH DE DK ES FR GB GR IT LI LU NL SE

(71) Applicant: ROHM AND HAAS COMPANY
Independence Mall West
Philadelphia Pennsylvania 19105(US)

(72) Inventor: Cohen, Leslie Alan
55 Polder Drive
Langhorne, Pennsylviana 19047(US)
Inventor: DeGraff, Darnel
3241 Hulmeville Road, Apt. 39
Bensalem, Pennsylviana 19020(US)

(74) Representative: Angell, David Whilton et al
ROHM AND HAAS (UK) LTD. European
Operations Patent Department Lennig House
2 Mason's Avenue
Croydon CR9 3NB(GB)

(54) **Thermal stabilization of glutarimide polymers.**

(57) Polymers containing a predominance of mers of (N-alkyl)dialkylglutarimide or (N-hydrogen)dialkylglutarimide are stabilized against bubbling and discoloration by inclusion of certain sterically hindered organophosphite or organophosphonite stabilizers.

EP 0 396 336 A1

# THERMAL STABILIZATION OF GLUTARIMIDE POLYMERS

This invention concerns the stabilization of polymers containing a preponderance of mers of N-(alkyl)-dialkylglutarimides or N-(hydrogen)dialkyl glutarimides, and also a small amount of mers of methacrylic acid or methacrylic anhydride, against bubbling or discoloration upon exposure to temperatures above the glass temperature of the polymer, such as during molding or extrusion. It further relates to stabilization being accomplished by certain classes of stabilizers known as sterically hindered organophosphites or organophosphonites. It further relates to the use of such stabilized polymers as formed by heat into molded or extruded products free of yellow color and without bubbles formed on processing thick pieces.

In the present invention, the term "polyglutarimide" refers to a polymer which contains more than 50 weight percent of mers of the cyclic structure (N-alkyl) dialkylglutarimide or N-(hydrogen)dialkylglutarimide. Since the discovery of thermally stable polyglutarimides and a practical process for their preparation (US-A-4,246,374), such polymers, especially those prepared by the treatment of poly(methyl methacrylate) with monomethyl-amine or ammonia in a devolatilizing extruder, have been employed as clear glazing or protective materials having acceptable impact and modulus properties and with a higher service temperature than most clear thermoplastics. The technology taught in US-A-4,246,374 relates to reactions using a variety of amines; although the stabilization incorporated by the hindered stabilizers of the present invention is expected to be seen with all glutarimide polymers so taught, the present invention relates only to those glutarimide polymers prepared from ammonia or from primary N-alkylamines of four or fewer carbon atoms, such as methylamine, ethylamine, propylamine, n-butylamine, and i-butylamine.

In the preparation of polyglutarimides, whether from polymers having mers of methyl methacrylate, methacrylic acid, or methacrylic anhydride, it is difficult to avoid forming a low percentage of mers of methacrylic acid or anhydride. In certain uses, such acid or anhydride mers are undesirable, as they adversely affect water absorption equilibrium values. Means to remove such groups, such as taught by US-A-4,727,117 for reduction of acid content in such polyglutarimides by a post-polymerization reaction have led to poly(glutarimides) of improved chemical resistance, including water resistance, miscibility, and melt flow. However, such further reaction involves an additional processing step and does slightly lower the service temperature of the resulting polymer. Therefore, it is often desirable to utilize the untreated glutarimide polymer, especially in maintaining a high glass temperature or service temperature.

It is also known that glutarimide polymers, because of their high service temperature, require high-temperature melt processing conditions which can adversely effect color. With the stabilized low residual acid polymers of US-A-4,727,117, conventional thermo-oxidative stabilizers may be employed, such as tris-(nonylphenyl)phosphite, dialkyl pentaerythritol diphosphites, dialkaryl pentaerythritol diphosphites, and the like. If acid groups are present, however, those otherwise effective stabilizers are destroyed, and volatiles may be liberated on molding which adversely affect the appearance of a molded part.

US-A-4,745,159 claims a glutarimide polymer of low yellowness prepared by use of a precursor polymer with low methacrylate dimer content and a specialized solution polymerization process. Stabilizers, such as organophosphites, to prevent depolymerization are disclosed. There is no suggestion of the present invention. The reference teaches molding to thin (2 mm.) plaques of excellent optical properties, but is silent on thermal instability in thicker moldings.

Japanese Kokai 58-123729 broadly teaches the use of organophosphorus compounds to improve impact strength and lessen thermal discoloration of polymers having imide side chains. It does not describe the specific imide polymers disclosed in US-A-4,246,374, nor exemplify any glutarimide polymer. The specific phosphites or phosphonites of the present invention are not disclosed.

Japanese Kokai 60-120735 teaches the use of organophosphorus stabilizers for copolymers containing the six-membered glutaric anhydride structure. It lists many phosphites, but none of the sterically hindered phosphites of the present invention.

The class of sterically hindered phosphites and phosphonites of the present invention have species which are commercially available and known to stabilize other plastics, e.g., use of a sterically hindered phosphonite in stabilization of poly(butylene terephthalate) is taught in EP-A-251,711. Use of a sterically hindered phosphite in polyethylene is taught in Allen et al., Polymer Degradation and Stability, 19,177 (1987).

There is no disclosure of the specific stabilizers for poly(N-hydrogen)dialkylglutarimide or poly(N-alkyl)-dialkylglutarimide (known for convenience as polyglutarimide) containing acid or anhydride groups against decolorization and bubble formation on heating or molding or extrusion. Thus, the present invention seeks to provide a stabilizer for polymers having a preponderance of mers of (N-hydrogen)dialkylglutarimide or (N-alkyl)dialkylglutarimide and with low but measurable levels of mers of methacrylic acid or methacrylic

anhydride, such stabilizers allowing the molding of the polymer without development of yellow color or bubbles, and effective in the presence of ultraviolet light stabilizers and/or lubricants.

We have discovered that a specific class of sterically hindered phosphites impart to such glutarimide polymers containing acid or anhydride mers or units stability against discoloration and bubble formation on molding. By sterically hindered is meant a tris(alkarylphosphite) wherein for each aryl ring at least one ortho position relative to the P-O-ring bond is substituted with tertiary alkyl group, or a tris(alkaryl) arylphosphonite wherein both alkaryl groups contain at least one ortho position relative to the P-O-ring bond substituted with a tertiary alkyl group.

Thus the invention provides a composition comprising:

a) polymer containing at least 50 weight percent of units of (N-alkyl)dialkylglutarimide and/or (N-hydrogen) dialkylglutarimide, and from 0.5 to 10 weight percent of units of methacrylic acid and/ or methacrylic anhydride, the balance (if any) at least partly comprising units of one or more other ethylenically unsaturated monomers;

b) sterically hindered phosphite and/ or phosphonite as stabiliser for polymer (a).

As sterically hindered organophosphite stabilizers are preferred phosphites of the formula:

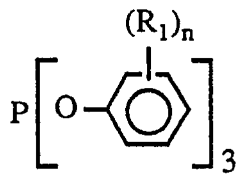

wherein $R_1$ is one or more of hydrogen, alkyl, for example lower alkyl of from 1 to 10 carbon atoms such as methyl, ethyl, propyl, butyl, iso-butyl, sec-butyl, tert-butyl, pentyl, isopentyl, n-hexyl, methyldiethyl-carbinyl, heptyl, n-octyl, nonyl, i-nonyl, decyl, and the like and n is an integer of 1 to 5 with the proviso that attached to at least one carbon atom of the benzene ring ortho to the carbon atom attached to the oxygen atom is a branched alkyl, preferably a tertiary alkyl substituent.

Particularly preferred are compounds of the following formula:

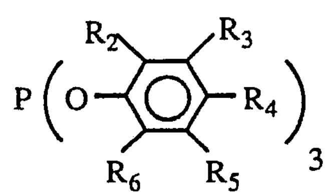

wherein $R_2$ is tertiary alkyl of from 4 to 8 carbon atoms, such as tert-butyl, tert-octyl and the like, and $R_3$, $R_4$, $R_5$ and $R_6$ are alkyl or hydrogen. Especially preferred are compounds wherein $R_2$ and $R_4$ are tertiary-alkyl and $R_3$, $R_5$ and $R_6$ are hydrogen.

The sterically hindered phosphonites of this invention are preferably those of the structure:

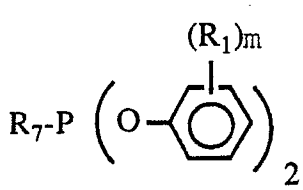

or

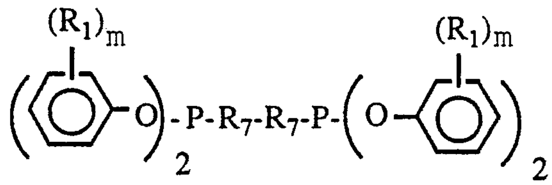

wherein $R_1$ and m are as defined above and $R_7$ is aryl or alkaryl with the proviso that attached to one of the carbon atoms of each of the phenyl rings ortho to the carbon attached to the oxygen is a tertiary alkyl substituent. Especially preferred is tert-butyl.

As polymers containing mers (ie units) of N( alkyl)dialkylglutarimide are preferred polymers with mers of the structure

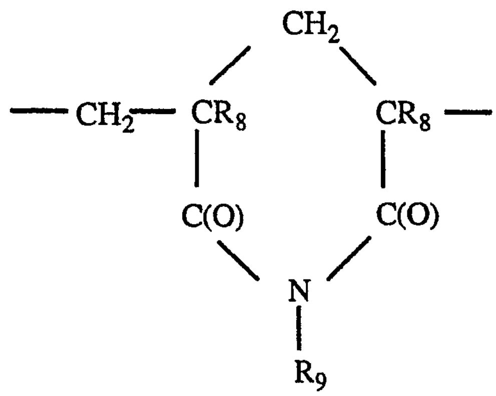

where $R_8$ is alkyl, preferably methyl, and $R_9$ is alkyl such as n-, sec- or isoalkyl, preferably methyl. As used herein with respect to the glutarimide polymers, "alkyl" represents $C_1$-$C_4$ alkyl. The invention relates to such polymers where the weight percent of such mers is above 50 %. Preferred for high service temperature are those polymers where the weight percent of such mers is from about 60% to about 90%. Such preferred polymers, when $R_9$ is methyl, have a glass temperature or Vicat softening temperature (a measure of temperature required for a defined extent of penetration, related to the glass temperature) of at least about 140 degrees C.

As polymers containing mers of (N-hydrogen) dialkylglutarimide are preferred polymers containing mers of the structure

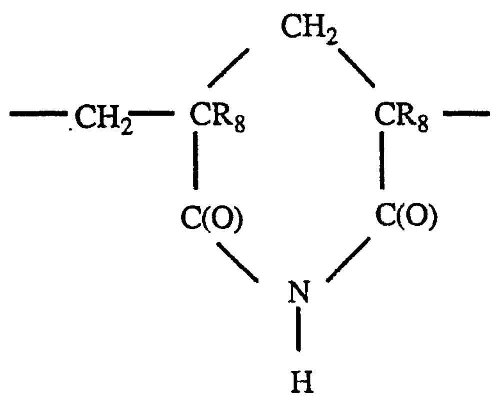

where $R_8$ is $C_1$-$C_4$ alkyl, preferably methyl. The invention relates to such polymers where the weight percent of such mers is above 30 %. Preferred for high service temperature are those polymers where the weight percent of such mers is from about 50% to about 90%. Such preferred polymers have a glass temperature or Vicat softening temperature (a measure of temperature required for a defined extent of penetration, related to the glass temperature) of at least about 140 degrees C.

Other mers may be present, as is taught for example , in US-A-4,246,374. Preferred mers are those of ethylenically unsaturated monomers, such as methacrylic acid, acrylic acid, maleic acid, or fumaric acid; the esters, especially the lower alkyl esters of those acids; the cyclic anhydrides of those acids; the amides, especially the N(lower alkyl) amides of those acids; styrene; alpha-methylstyrene; and alkyl styrenes. More preferred are mers of lower alkyl methacrylates, such as methyl methacrylate, or lower alkyl acrylates, such as methyl or ethyl acrylate. Especially preferred are mers of methyl methacrylate.

The polymer is preferably prepared by the method of US-A-3,246,374, but other processes, such as reaction of poly(methyl methacrylate) with monomethylamine in a pressurized kettle at high temperature, reaction of polymers with a high percentage of methyl methacrylate mers with a primary alkyl amine in an appropriate solvent, reaction of polymers with a high percentage of N-methylmethacrylamide mers to eliminate methyl amine, or reaction of polymers having a high percentage of mers of glutaric anhydride with ammonia or methyl amine may be used. Such polymers may not exhibit the thermal stability or clarity of those prepared by the process of U.S. 3,246,374, which thermal stability is expressed by a weight loss of no more than 1% at a temperature of 285° degrees C, as measured by thermogravimetric analysis, as well as by solubility in solvents such as dimethylformamide and tetrahydrofuran.

The acid content of polymers made by the process of U.S. 3,246,374 will usually exceed about 0.5 weight %, but should not exceed 6%. It is believed that glutarimide polymers made by other processes will exhibit similar acid contents, with polymers made by the solution process on the low side of the range. Typical acid contents of the matrix polymers of the present invention are values of from about 2 to about 3.5 weight % (calculated from millequivalents/gram of about 0.10 to about 0.60, the analytical method being taught in U.S. 4,727,117).

The hindered stabilizers may also be used in combination with glutarimide polymers of lower or no acid content, such as those taught by U.S. 4,727,117, to impart stability on thermal processing. The hindered stabilizers may be added to the glutarimide polymer by post-compounding of additives and unstabilized powder or pellets of the glutarimide polymer, or by addition during or prior to the imidization or acid-reduction steps. The hindered stabilizer and other additives may be added prior to, during, or after the preparation of the polymer which is reacted with ammonia or lower alkylamine to prepare the glutarimide polymer, such as by addition to poly(methyl methacrylate) in the melt after its polymerization is completed but prior to extrusion and pelletization.

A preferred method is to add the hindered stabilizers, along with any other additives such as toners, lubricants, colorants, ultraviolet stabilizers, and the like, to the molten glutarimide or acid-reduced glutarimide polymer prior to extrusion into pellets, strands, sheet, or film. This process exposes the polymer and the additive to less heat history than re-processing of already extruded polymer.

The level of hindered phosphite or phosphonite stabilizer to be effective is desirably from about 0.05 to about 1.0 weight percent, based on the glutarimide polymer (matrix polymer). At lower levels, the hindered stabilizers will be largely ineffective; at higher levels, the hindered stabilizers may not be fully soluble in the polymer and cause a deleterious effect on optical properties or heat distortion values. Preferred is from about 0.1 to about 0.50 weight percent.

Lubricants are well-known components of acrylic-based molding materials,serving to prevent sticking to hot metal surfaces and release from the mold or die lips. Such lubricants include high molecular weight alcohols, such as those of twelve to twenty-four carbons, esters, especially long-chain alkyl esters of high molecular weight acids, such as butyl or stearyl stearate, monoesters of glycols, such as ethylene glycol monostearate, and the like. Preferred is stearyl alcohol. Levels of lubricants, when used, may range from about 0.05 to about 0.50 weight percent on polymer; preferred is about 0.30 %.

The stabilized polymer may also contain ultraviolet stabilizers. Ultraviolet stabilizers are well-known additives for thermoplastics, including the present glutarimides, and include hydroxybenzophenones, salicylate esters and benzotriazoles. Also included for specific high temperature uses are the hindered amines disclosed in the Fromuth et al. application concurrently co-filed. For general purposes, preferred are benzotriazole stabilizers, such 2-(2′-hydroxy-5′-methylphenyl)benzotriazole and 2-(2′-hydroxy-5′-t-octylphenyl)benzotriazole. Preferred is from about 0.10 to about 0.50 percent of the benzotriazole with about 0.05 to about 1.0 percent of the organophosphite or organophosphonite, based on weight of the glutarimide matrix polymer.

The resulting polymer blend may be molded at melt temperatures recommended for glutarimide polymers, which range from about 246 to about 330 degrees C, preferably from about 246 to about 316 degrees C, and most preferably from about 274 to about 316 degrees C. The polymers may be extruded into film, formed into parisons and blown, or may be compression or injection molded into useful articles.

Useful articles which can be prepared from the stabilized glutarimide polymers of the present invention include windows, protective shields, housings, and the like for heat-emitting light sources. Such include lighting for cars, trucks, airplanes, buses, and the like, high intensity discharge lighting, such as from metallic vapors, mercury sources, sodium vapor, and the like.

The stabilized polyglutarimides of the present invention are useful in applications as sheet, film, molded articles, or extruded articles not requiring high values of clarity or visible light transmittance, but which do require color stability and lack of bubble formation on thermal processing. One such use may be in pigmented or colored articles, such as automotive exterior lighting in yellow, red, orange, and the like. A second use may be in surface-altered articles having a matte finish to lower reflectance, alter contact behavior with other surfaces, and the like. Such articles may be prepared by surface roughening, such as extrusion over roughened rolls, by use of certain inorganic fillers, or by use of surface-altering plastic additives with similar refractive indices, such as taught by Lang in US-A-4,000,216.

A related use in in plastic objects specifically treated to diffuse light, either accompanied by a lowering of total light transmittance, as in the case where diffusive additives with different refractive indices are incorporated, or by maintenance of much of the total light transmittance, such as when certain additives of very small particle size or other diffusing additives carefully matched to be close to, but not exactly similar to, the refractive index of the matrix, are employed. Materials of the first type are useful, e.g., as "white"

light diffusers for large light sources. Materials of the second type are useful, e.g, as plastics exhibiting a uniform distribution of light over the total surface, such as in large screens for back-lit projection of visual images. Materials of the first type may be prepared, inter alia, by the method of Lang, US-A-3,992,486; materials of the second type may be prepared, inter alia, by the method disclosed in EP-A-269,324.

The plastic object may be completely opaque, as will occur in a highly-filled system with an opaque additive or pigment, such as wollastonite, talc, titanium dioxide, and the like. The opaque formulation may also be a blend with an incompatible plastic, or preferably a blend with a compatible plastic which blend also contains an opaque additive. For example, a blend of the stabilized glutarimide with poly(vinyl chloride), said blend also containing an acrylic impact modifier and a pigment such as titanium dioxide, will be opaque and will be useful as extruded siding for outdoor applications, especially in dark colors.

Glutarimide polymers containing the hindered stabilizers also are useful in blends with other plastics miscible with the glutarimide to yield transparent blends, such as with poly(vinyl chloride), styrene-acrylonitrile copolymers, or certain polyamides, as taught in US-A- 4,255,322, US-A-. 4,436,871 and US-A-. 4,415,706.

The articles mentioned above may be protected from abrasion by cleaners, storage, dirt, and the like, by use of coatings of non-stabilized glutarimide polymers. Appropriate coatings are preferably based on multi-functional acrylic monomers, or on siloxane chemistry, and appropriate technology for forming and applying such coatings is found in such patents as US-A- 4,689,243, US-A- 4,737,409, US-A- 3,451,838, and US-A-3,986,997, as well as Japanese Kokai 85-215032.

The abrasion-resistant coatings may contain colloidal dispersions of silica, such as is taught in US-A-3,986,987, or other metallic materials, such as taught in US-A-4,390,373, 4,442,168, 4,500,669, 4,540,634, 4,571,365, and 4,702,773. Such abrasion-resistant coatings may be applied with a tie layer imparting flexibility and better adhesion between the abrasion-resistant coating and the stabilized poly(glutarimide) substrate, such as by use of a solution of an acrylic polymer or a polysiloxane; the latter is taught in US-A-t 3,616,839. The abrasion-resistant topcoat and/or the tie layer may contain an appropriate stabilizer against the effects of ultraviolet light, as is taught in US-A- 4,371,585.

It has been difficult to maintain such coatings on poly(glutarimide) substrates in the past, possibly due to failure at the interface. The polymers of the present invention are expected to be somewhat less susceptible to such degradation, especially if they contain an ultraviolet stabilizer and a limited amount of lubricant. Additional means to improve adhesion include etching of the surface, either physically or with an appropriate solvent, prior to application of the coating, use of an adhesive tiecoat between abrasion-resistant coating and the substrate, and/or use of an ultraviolet stabilizer in the coating to protect against degradation at the surface.

It is also possible to use films or sheets of polyglutarimides stabilized as in this invention and also containing ultraviolet stabilizers to protect polymers such as unstabilized glutarimides, polycarbonate, and the like, for formation of laminates or overlays. The composite structures may be formed by co-extrusion of layers, by laminating together layers of pre-formed film or sheet, or by other techniques for making laminated structures that will be readily apparent to those skilled in the art. The layers of the structure are adherent to one another; they may adhere as a result of being co- extruded, of being glued together with a suitable type of adhesive, or of other adhesion processes. The adhesives and the other adhesion processes may be readily selected by those skilled in the art.

The layers of the structure are preferably continuous layers, and more preferably they have a uniform thickness. That is, they do not have discontinuities, holes, thin spots and the like. The preferred thickness of both the gas-barrier layers of the stabilized polyglutarimide and of the more permeable layers is from about 0.02 mm to about 10 mm; the layers may be of equal or different thickness. The adhesive, where used, is not usually considered a layer, unless it forms a continuous layer from about 0.02 to about 10 mm thick which is more permeable than the gas-barrier layer.

The composite structure may be biaxially oriented, uniaxially oriented or unoriented.

The uses to which such composite structures may be placed are many. Films may be used in the packaging of many foodstuffs, such as meat, snacks, boil-in-the-bag items such as frozen vegetables, and the like. Containers suitable for the packaging of carbonated or oxygen-sensitive beverages, such as colas, ginger ale, fruit juice, and the like, may be prepared. Containers suitable for hot-fill or sterilization may be molded from suitable injection-molded or extruded parisons. Such containers or bottles may be used for packaging of condiments, ketchup, maple syrup, and the like. They may also be used for heat-sterilized containers, such as for intravenously administered fluids, and the like.

The stabilized poly(glutarimides) of the present invention may be used in combination with reinforcing or filler materials, such as glass fibers, polymeric fibers, glass beads, titanium dioxide, talc, mica, clay, and the like. They may also be used in combination with other polymers with which they are compatible, such

as poly(vinyl chloride), polycarbonates, polyesters, and the like. Many uses already established for such blends using the unstabilized poly(glutarimide) require exposure to outdoor or short-wavelength light, where the stabilized composition of the present invention plus an ultraviolet stabilizer, should exhibit improved stability.

## EXAMPLES

The following examples are merely intended to illustrate the present invention and not to limit it. All percentages are by weight unless otherwise specified.

### A. Polymer Preparations and Incorporation of Stabilizers

All of the exemplified polymers containing mers of (N-methyl) dimethylglutarimide and mers of methacrylic acid were prepared by methods known in the art utilizing a poly(methyl methacrylate) of MW ca. 150,000 as precursor and monomethylamine. Reactions were carried out to either ca. 66 or ca. 84 mol % (76 or 90 weight %) of glutarimide mers. Certain polymers were then further reacted with dimethyl carbonate. In most of these preparations, there were no additives incorporated after imidization or acid-reduction. The polymers of the present study were prepared by the reaction of a poly(methyl methacrylate) homopolymer of MWw ca. 150,000 with methylamine in a devolatilizing twin-screw reactor. If reduction of the acid/anhydride content was desired, the reaction with the agent for reducing acid/anhydride was conducted on the polymer in a continuous manner, i.e., the glutarimide polymer was not isolated prior to the acid-reducing reaction, but the molten glutarimide was carried to an adjacent zone in the extruder and there reacted with the agent, after which the acid-reduced glutarimide was isolated by stranding, cooling, and pelletizing.

The process for making polyimides and reducing or substantially eliminating acid and anhydride functionality involves determining the amount of acid and anhydride of the polyimide prior to treatment with an agent by removing a sample of polyimide prior to reaction with the agent for reducing acid and anhydride functionality and titrating the amount of acid and anhydride present. A calculated amount of the agent, based on the desired acid and anhydride level is then added. Alternatively, one may determine the amount of agent to add by preparing the polyimide under the same conditions to be used in the continuous process, and then measuring the acid and anhydride level. As long as the feed stock is converted to the same polyimide and treated with the agent under the same conditions, the resultant final product is substantially the same.

The extruder used was a 2.0 cm. (0.8 inch) non-intermeshing contra-rotating twin screw extruder. (Other size extruders can be used and they will afford similar results.) The extruder has one section about six diameters long, for introducing and plasticating the polyglutarimide followed by a closed barrel section about 6 diameters long for pumping and pressure generation, followed by the reaction zone. This zone, about 31.5 diameters long, comprises a ported barrel section for introducing blocking agents, closed barrel sections, and a venting section for removing volatile products. Another vented section, operated at substantially atmospheric pressure, following the reaction zone, for removing additional volatiles. Larger extruders, such as a 5.1 cm. extruder of the same design, may be used to achieve similar results. The first (imidization) zone is 61 cm. long, and was equipped with means for adding solid polymer and methylamine. The feed rate of the polymer was 60 - 75 grams / minute. The barrel temperature in the imidization zone was 302 °C. For preparations of Examples 13-19,23, and 25 -27, the methylamine was added at a rate of 21-23 grams/minute, and the gauge pressure was 6890 kPa; for preparations of Examples 5-12,20-22, and 24, the methylamine feed rate was 19 grams/minute, and the gauge pressure 5200 - 5800 kPa.

Samples of Examples 5-10 and 13- 24 were isolated at this point without further reaction. Samples 11-12 and 25-27 were conveyed into the second zone as described above. Within this zone of ca. 31 cm. in length were means for adding the acid-reducing reagent and means for venting volatile products. Another venting section followed for further devolatilization. The barrel temperature was 288 °C. For Examples 15-27, dimethyl carbonate (DMC) was added at a pressure of 4800 - 5500 kPa; for Examples 11-12, the pressure was 3100 kPa. In both cases, the feed rate of DMC was 8 to 10 grams/ minute. For most of the experiments reported here, the polymer containing glutarimide mers was re-extruded in a single-screw Killion extruder (20.3 mm. diameter) at a melt temperature as shown in Table III, the additives being combined in the melt zone just prior to extrusion as a strand. Control polymers wherein no additive was incorporated were also re-processed by extrusion to present a similar heat history, and are noted by (C).

B. Films

A Carver Press was used to compression mold the pre-dried pellets into 100 mm. x 100 mm. by 0.25 mm films under a pressure of 6890 kPa for 3 minutes, followed by 17230 kPa for 7 minutes, at temperatures (both platens) of 274,288,302 or 316 degrees C. The 302 and/or 316 degrees C. are the most critical temperatures for bubble formation. The film was then removed to a cold press (water cooling) and kept under 13800 kPa pressure for 2 minutes. The film was then visually rated in terms of the incidence of bubbles.

C. Bars

Bars (6.35 mm. x 12.7 mm. x 127 mm.) were injection molded according to the ASTM 6.35 mm. Flexbar Test. A Stokes injection machine was used; the molding conditions are given in Table I. A carefully dried sample (4 to 5 hours at 120 °C in air of -29 °C dewpoint) is molded into end-gated bars. If decomposition of the stabilizer occurs, the central core of the bar will be filled with a large number of small bubbles of the vaporized component throughout the length of the sample. The effect is much more readily seen in bars of this thickness or above.

TABLE I

| Operations | Stokes | Newberry |
|---|---|---|
| Feed (rear), °C | 282 | |
| Metering (front), °C | 282 | 299-304(a,b) |
| Nozzle (variac) °C | 282 | 277 |
| Drying .Temp.(overnight), °C | 121 | 121 |
| Mold Temp., °C | | |
| Stationary | 93 | 107 |
| Moveable | 93 | 107 |
| Injection Forward | 20 sec. | |
| 1st Stage Injection (booster) | 10 sec. | 15 sec. |
| Cure | 25 sec. | |
| Mold Closed | 45 sec. | |
| Mold Open | 5 sec. | |
| Total Cycle | 50 sec. (c) | 45 sec. |
| Injection Speed | Maximum | |
| Screw Speed (rpm) | 100 | 300-350 |
| Back Pressure (kPa) | | |
| Injection (1st stage) (kPa) | 2070 | 2760 |
| Pressure (2nd stage) (kPa) | 1030 | |
| Cushion (mm.) | 6.35 | |
| Feed Setting (mm.) | 82.55 | |

(a) barrel temperature at 282, °C
(b) Glutarimide of 90% degree of imidization: melt temperature 310-316, °C
(c) In some experiments (Ex. 33), a molding cycle of 215 seconds was used.

D. Plaques

To measure optical properties, which are yellowness index (YI) (ASTM D-1925), % haze, and % total white light transmission (% TLT) (both by ASTM D-1003), 50.8 mm. x 76.2 mm. x 3.18 mm. plaques were

injection molded using a Newbury machine. Processing conditions are found in Table I.

EXAMPLES 1 - 4

These examples list the stabilizers examined in the present study.

TABLE II

| Example No. | Name |
|---|---|
| 1 | Tris(nonylphenyl)phosphite |
| 2 | Tetrakis-(2,4-di-tert-butylphenyl)-4,4′-biphenylene diphosphonite |
| 3 | Bis-(2,4-di-tert-butylphenyl)pentaerythritol diphosphite |
| 4 | Tris-(2,4-di-tert-butylphenyl) phosphite |

EXAMPLES 5 - 26

This example illustrates the compositions of glutarimides studied for resistance to bubble formation and discoloration. N means used directly as pellets from imidization; Y means re-extruded under the conditions described. (C) means a re-extruded control with no additives; (CC) means a re-extruded control with the prior art tris(nonylphenyl)phosphite.

TABLE III

| Example | Extent of Imidization(a) wt% | Acid reduced(b) | Re-extruded(c)(d) | Additives, wt.% based polymer |
|---|---|---|---|---|
| 5 | 66 | No | No | --- |
| 6 (C) | 66 | No | Yes(c) | --- |
| 7 (CC) | 66 | No | Yes(c) | Ex. 1,0.15 |
| 8 | 66 | No | Yes(c) | Ex.2,0.11 |
| 9 | 66 | No | Yes(c) | Ex.3,0.06 |
| 10 | 66 | No | Yes(c) | Ex.4,0.14 |
| 11 | 66 | Yes | No | --- |
| 12 | 66 | Yes | No | --- |
| 13 | 84 | No | No | --- |
| 14 (C) | 84 | No | Yes(d) | --- |
| 15 (CC) | 84 | No | Yes(d) | Ex.1,0.15 |
| 16 | 84 | No | Yes(d) | Ex.2,0.11 |
| 17 | 84 | No | Yes(d) | Ex.4,0.14 |
| 18 | 84 | No | Yes(d) | Ex.2,0.25 |
| 19 | 84 | No | Yes(d) | Ex.4,0.50 |
| 20 | 66 | No | Yes(c) | Ex.2,0.08 |
| 21 | 66 | No | Yes(c) | Ex.4,0.20 |
| 22 | 66 | No | Yes(c) | Ex.4,0.25 |
| 23 | 84 | No | Yes(d) | Ex.2,0.22 |
| 24 | 66 | Yes | Yes(c) | --- |
| 25 (CC) | 84 | Yes | Yes(d) | Ex.1,0.15 |
| 26 | 84 | Yes | Yes(d) | Ex.2,0.11 |
| 27 | 84 | Yes | Yes(d) | Ex.4,0.25 |

(a) as calculated from nitrogen content or calibrated against known samples by the softening temperature (Vicat).
(b) with dimethyl carbonate.
(c) Melt temperature of reprocessing 270°-275° C.
(d) Melt temperature of reprocessing 290°-295° degrees C.

EXAMPLE 28

This example demonstrates the stability to bubble formation when the stabilizers of the present invention were incorporated into polymers containing glutarimide mers and low levels of acid mers. The stabilizer of Example 3, ineffective in this study (Example 9), is advertised as having excellent hydrolytic stability.

The test is somewhat complicated by the formation at higher temperatures of a different type of bubble (noted by the symbol $), probably related to thermal breakdown of the polymer itself, and not related to the decomposition of the stabilizer. Here the stabilizers of the invention were also not deleterious to breakdown. It will be noted that tris(nonylphenyl)phosphite, unstable in the presence of the non-acid reduced polymer, does not detract from stabilization with the acid-reduced polymer, and that the acid-reduced polymer is more stable against thermal breakdown of the polymer at high temperatures.

TABLE IV

| Bubble Appearance/Incidence @ Temp., degrees C | | | | |
|---|---|---|---|---|
| Example | 274 | 288 | 302 | 316 |
| 5 | no | no | no$ | no$ |
| 6 (C) | no | no | no | no$ |
| 7 (CC) | yes | yes + | yes + + | yes + + + |
| 8 | no | no | no | no$ |
| 9 | yes- | yes + | yes + + | yes + + + |
| 10 | no | no | no | no$ |
| 11 | no | no | no | no |
| 12 | no | no | no | no |
| Footnotes: The markings (-, +, + +, + + +) denote the volume/surface density of the bubbles; the + + + represents a larger population of larger bubbles. | | | | |

EXAMPLE 29

This example illustrates the maintenance of stability of the stabilizers of the invention relative to the use of a non-hindered phosphite stabilizer with a matrix polymer of essentially all glutarimide mers. In the second series, instability was seen for the non-re-extruded control, which is not consistent with many other experiments. Also in that series, instability is seen for the hindered phosphite at a high level (0.50%) of stabilizer. The stabilizer had been shown in many experiments to be effective at lower levels (0.14 to 0.25%); the reason for this anomaly is not known.

TABLE V

| Example | Series | Bubbles at 302 degrees C |
|---|---|---|
| 13 | 1 | no |
| 14 (C) | 1 | no |
| 15 (CC) | 1 | yes |
| 16 | 1 | no |
| 17 | 1 | no |
| 13 | 2 | yes |
| 14 (C) | 2 | no |
| 15 (CC) | 2 | yes |
| 18 | 2 | no |
| 19 | 2 | yes |

EXAMPLE 30

This example illustrates the ability of the stabilizers of the present invention to control bubble formation in these relatively thick (6.35 mm) bars, where the problem was exhibited during molding. The matrix was a glutarimide polymer of ca. 65% imidization.

TABLE VI

| Examples | Bubble Incidence |
|---|---|
| 5 | no |
| 6 (C) | no |
| 7 (CC) | yes + |
| 8 | no |
| 20 | no |
| 10 | no |
| 21 | no |
| 22 | no |

EXAMPLE 31

This example compares the optical properties of plaques containing no stabilizer, the bubble-causing tri(nonylphenyl)phosphite, and stabilizers of the present invention. It should be noted that bubbles were not noted for any samples in molding these thinner pieces. All stabilized plaques had better optical properties than the control sample which had been given a similar heat history.

TABLE VII

| Example | YI | %Haze | %TWLT |
|---|---|---|---|
| 5 | 2.6 | 1.3 | 91 |
| 6 (C) | 3.5 | 1.1 | 91 |
| 7 (CC) | 2.2 | 1.1 | 92 |
| 8 | 2.1 | 1.3 | 91 |
| 22 | 2.2 | 1.5 | 91 |

EXAMPLE 32

This example illustrates the better stability of the stabilized plaques to yellowing on molding compared with the non-stabilized control. In this experiment, a short molding cycle (45 seconds total) was used.

TABLE VIIA

| Example | YI | %Haze | %TLT |
|---|---|---|---|
| 5 | 2.60 | 1.21 | 91.60 |
| 6 (C) | 3.52 | 1.30 | 90.38 |
| 7 (CC) | 1.99 | 0.92 | 91.58 |
| 8 | 2.31 | 0.83 | 91.65 |
| 20 | 2.75 | 1.05 | 91.36 |
| 10 | 2.72 | 0.81 | 91.38 |
| 21 | 2.58 | 1.15 | 91.09 |
| 22 | 2.24 | 1.54 | 91.45 |

EXAMPLE 33

This example illustrates the better stability imparted by the hindered phosphonite of the present invention, relative to the hindered phosphite. No control was available for this series. In this experiment, a long molding cycle (215 seconds total) was used on the Stokes machine. Both stabilizers yielded plaques of commercially acceptable optical quality.

TABLE VIII

| Example | YI | %Haze | %TLT |
|---|---|---|---|
| 20 | 2.21 | 1.07 | 91.14 |
| 10 | 2.74 | 1.26 | 91.18 |
| 21 | 3.04 | 1.40 | 90.74 |
| 22 | 2.88 | 2.10 | 91.43 |

EXAMPLE 34

This example compares stability in the glutarimide matrix of higher glutarimide mers content. Again superiority over the control is seen. It is noted that higher concentrations of these additives begin to exhibit haze or turbidity, suggesting limited solubility in the glutarimide matrix.

TABLE IX

| Example | YI | %Haze | %TLT |
|---|---|---|---|
| 13 | 5.9 | 3.8 | 90 |
| 14 (C) | 6.6 | 1.5 | 89 |
| 15 (CC) | 3.9 | 1.1 | 91 |
| 23 | 3.9 | 3.8 | 89 turbid |
| 19 | 5.2 | 2.7 | 89 |

EXAMPLE 35

This example illustrates the combination of the hindered stabilizers of the present invention in an acid-reduced glutarimide. In this series, the tris(nonylphenyl)phosphite is preferred for color stability, and there was no bubble formation in the absence of acid groups within the polymer. However, the hindered stabilizers exhibit commercially acceptable optical properties.

Table X

| Example | YI | %Haze | %TLT |
|---|---|---|---|
| 11 | 4.3 | 2.6 | 90 |
| 24 | 5.2 | 1.2 | 90 |
| 25 (CC) | 3.9 | 1.2 | 90 |
| 26 | 4.9 | 1.6 | 90 |
| 27 | 5.3 | 2.6 | 90 |

While the invention has been described with reference to specific examples and applications, other

modifications and uses within the scope of the invention will be apparent to those skilled in the art.

## Claims

1. A composition comprising:

a) polymer containing at least 50 weight percent of units of (N-alkyl)dialkylglutarimide and/or (N-hydrogen) dialkylglutarimide, and from 0.5 to 10 weight percent of units of methacrylic acid and/or methacrylic anhydride, the balance (if any) at least partly comprising units of one or more other ethylenically unsaturated monomers;

b) sterically hindered phosphite and/or phosphonite as stabiliser for polymer (a).

2. The composition of Claim 1, wherein said polymer contains acid or anhydride units representing from 0.10 to 0.60 milliequivalents/gram of the polymer, and the weight percent of units of (N- alkyl)-dialkylglutarimide and/or (N-hydrogen)dialkylglutarimide is from 75 to 90 percent.

3. The composition of Claim 1 or 2 wherein the units of (N-alkyl)dialkylglutarimide comprise units of (N-methyl) dimethylglutarimide, and/or those of (N-hydrogen)dialkylglutarimide comprise (N-hydrogen)-dimethylglutarimide.

4. Composition according to any preceding Claim wherein the amount of phosphite or phosphonite present is from 0.05 to 1.0 preferably from 0.1 to 0.5 weight percent based on the glutarimide polymer.

5. The composition according to any preceding Claim wherein the sterically hindered phosphite has the structure:

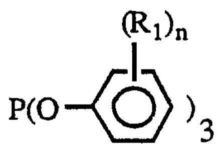

wherein $R_1$ is one or more substituents selected from hydrogen or alkyl and n is an integer of 1 to 5 with the proviso that attached to at least one of the carbon atoms of the benzene ring ortho to the carbon atom attached to the oxygen atom is a branched alkyl substituent, and the sterically hindered phosphonite has the structure

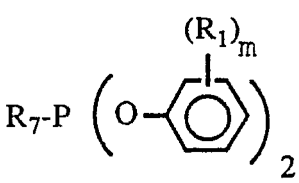 or 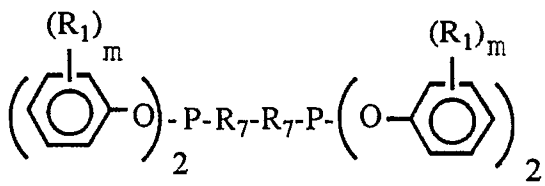

wherein $R_1$ is one or more substituents selected from hydrogen or alkyl, m is an integer of 1 to 5 and $R_7$ is aryl or alkaryl with the proviso that attached to at least one of the carbon atoms of the phenyl rings ortho to the carbon attached to the oxygen atom is a tertiary alkyl substituent.

6. Composition according to Claim 5, wherein the branched alkyl or tertiary alkyl is tert butyl.

7. Composition of Claim 6 wherein the stabiliser is the compound named tris(2,4 di-tert-butyl phenyl)-phosphite, and/or that named tetrakis-(2,4-ditert-butylphenyl)-4,4′-biphenylene diphosphonite.

8. Composition according to any preceding claim wherein the composition contains an effective amount of ultraviolet light stabilizer and/or lubricant.

9. Composition according to any preceding claim, in the form of a moulded or extruded or otherwise shaped article, especially an article for use as an automobile part, a sheet or a film.

10. The use of sterically hindered phosphite and/or phosphonite as a stabiliser for polymer containing at least 50 weight percent of units of (N-alkyl)dialkylglutarimide and/or (N-hydrogen) dialkylglutarimide, and from 0.5 to 10 weight percent of units of methacrylic acid and/or methacrylic anhydride, the balance (if any) at least partly comprising units of one or more other ethylenically unsaturated monomers, during exposure to elevated temperature.

European Patent Office

# EUROPEAN SEARCH REPORT

Application Number

EP 90 30 4556

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,X | EP-A-234726 (MITSUBISHI RAYON CO., LTD.)<br>* claims *<br>* page 13, lines 10 - 23 * | 1 | C08K5/524<br>C08K5/5393<br>C08L33/24 |
| X | DATABASE WPIL, no. 83-835419, Derwent Publications Ltd., London, GB; & JP-A-58 183 729 (Denki Kagaku Kogyo K.K.) 27-10-1983 | 1-10 | |
| X | CHEMICAL ABSTRACTS, vol. 109,.no. 16, 17 October 1988<br>Columbus, Ohio, USA<br>ref. no. 130219H & JP-A-62 288 655 (Sumitomo Naugatuck Co., Ltd.) 15-12-1987<br>* abstract * | 1-10 | |
| D,X | CHEMICAL ABSTRACTS, vol. 104, no. 6, 10 February 1986<br>Columbus, Ohio, USA<br>ref. no. 34881U & JP-A-60 120 735 (Asahi Chemical Industry Co., Ltd) 28-06-1985<br>* abstract * | 1-10 | TECHNICAL FIELDS SEARCHED (Int. Cl.5 ) |
| P,X | EP-A-332136 (MITSUBISHI RAYON CO., LTD.)<br>* claims; example 5 * | 1-10 | C08K<br>C08L |

The present search report has been drawn up for all claims

| Place of search | Date of completion of the search | Examiner |
|---|---|---|
| THE HAGUE | 08 AUGUST 1990 | DE LOS ARCOS Y E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document



EPO FORM 1503 03.82 (P0401)